# EUROPEAN PATENT APPLICATION

(11) **EP 1 484 626 A1**
(43) Date of publication of application: **08.12.2004**
(21) Application number: 04101973.8
(22) Date of filing: 06.05.2004
(51) Int. Cl.: G02B 7/10

(54) **A Mechanism for Moving an Object Using a Lead Screw**

(30) Priority: 03.06.2003 KR 2003035764
(71) Applicant: Samsung Electronics Co., Ltd., Suwon-si, Gyeonggi-do 442-742 (KR)
(72) Inventor: JEONG, Yeong-hyo, Gyeonggi-do (KR); HWANG, Seong-ho, Gyeonggi-do (KR)
(74) Representative: Read, Matthew Charles

(57) **Abstract**

An apparatus for driving a lens in a camera includes a lens module installed in a reciprocating and sliding manner in an inside of a lens barrel, a lead screw installed on the lens barrel, for being rotated by a driving motor, and a power transferring member assembled on the lens module and equipped with a tooth-shaped part that corresponds to a tooth shape of the lead screw. The lens module has a lens and a slider having a mounting unit for mounting the lens and receiving the power transferring member in a movable manner. The mounting unit has a through groove in which one end of the power transferring member is fit and supported and a slit groove in which the other end of the power transferring member is fit to be supported for being movable in a direction perpendicular to the movement direction of the slider.

## Description

The present invention relates to a mechanism for moving an object, e.g. a lens in a camera, using a lead screw, the mechanism comprising a lead screw, an object and means for drivingly coupling the object to the lead screw.

Focus and zoom functions are now common in video cameras, digital still cameras and CCTV monitoring cameras. It is known to provide the focus and zoom functions by installing a reciprocally movable lens in a lens barrel.

For such reciprocating motion, the lens is mounted to a slider which can slide along a guide shaft. The slider includes a toothed part that engages a driven lead screw so that the lens can be moved.

However, recently, as light-weight and compact-sizing trends have been pursued, the lens barrel, the driving motor and the lead screw have been getting smaller. in particular, in the pursuit of accuracy and low power consumption for the driving motor and the lead screw, high precision in the components is required. Therefore, if there is an the lead screw is not assembled correctly with respect to the lens barrel or the power transferring member is incorrectly assembled, connection of the lead screw and the power transferring member may not be smoothly performed. In this case, the toothed part of the power transferring member may deviate beyond the allowable error range with respect to the axial direction of the lead screw. Accordingly, a big load is applied on the driving motor and a big frictional force is applied on the lead screw, so that excessive noise may be generated or normal operation may not be performed.

A mechanism, according to the present invention, is characterised in that the means for drivingly coupling the object to the lead screw comprises a lead screw engaging part and a drive receiving means attached to said object for receiving the lead screw engaging part so as to allow limited movement of the lead screw engaging part relative to the drive receiving means.

Preferably, said limited movement is parallel to the axis of the lead screw. More preferably, a biasing spring is included for biasing the lead screw engaging part to one end of its range of movement relative to the drive receiving means.

Preferably, the lead screw engaging means comprises first and second coaxial projections extending on opposite directions parallel to the axis of the lead screw and the drive receiving means has a hole which receives the first projection and a notch which receives the second projection. The first projection may be, at least in part, tapered. The notch may bulge at its closed end and the second projection be wider in one transverse direction than in the other orthogonal transverse direction so that it can be inserted into the slot in a first orientation but cannot be removed from the slot in a second orientation, in which the lead screw engaging means is rotated by substantially 90° about the axis of the second projection with respect to the first orientation. The bulged part of the notch may be generally circular, square, rectangular, triangular among other possible shapes.

According to the present invention, there is also provided a camera including a mechanism according to the present invention, wherein the object comprises a lens. Such a camera may also include a lens barrel and have the mechanism is installed in the lens barrel.

An embodiment of the present invention will now be described, by way of example, with reference to the accompanying drawings, in which:
Figure 1 is an exploded perspective view showing a lens driving apparatus according to the present invention;
Figure 2 is a side view of part of the apparatus of Figure 1;
Figure 3 is a front view of the portion illustrated in Figure 2;
Figure 4 is an exploded perspective view showing an a portion of the apparatus in Figure 1;
Figure 5 is a front view showing a power transferring member mounted on a slider;
Figure 6A is a view showing a portion of elements in Figure 5; and
Figure 6B showings a second axis rotated 90 degrees from of the portion illustrated in Figure 6A.

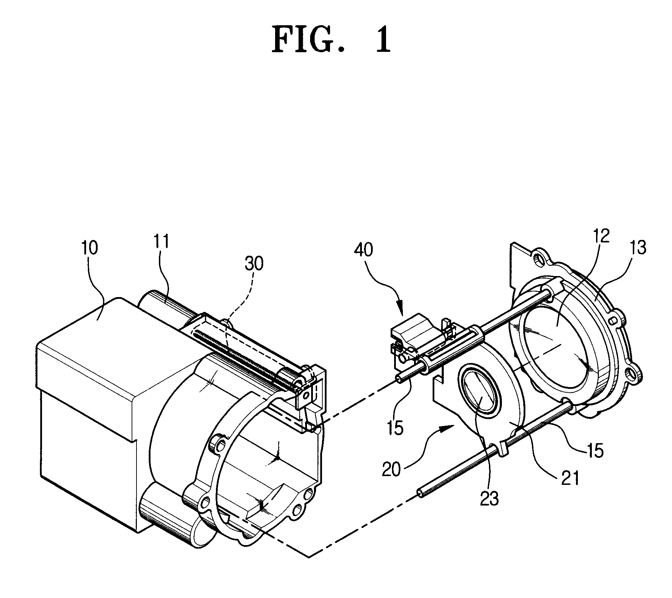

Referring to Figure 1, an apparatus for driving a lens in a camera includes a lens module 20 slidingly installed in a lens barrel 10, a lead screw 30, installed on the lens barrel 10 and adapted to be rotated by a driving motor 11, and a power transferring member 40 assembled with the lens module 20. The power transferring means has teeth which engage the thread of the lead screw 30.

The lens barrel 10 is installed within the main body of a camera (not shown). A focusing lens for focusing a image to be captured and a zoom lens are moveably installed in the lens barrel 10. A group of lenses, including an objective lens 12, are joined to a barrel cover 13 at the open end of the lens barrel 10. A guide shaft 15 for guiding the movement of the lens module 20 is installed inside the lens barrel 10. In the presently described embodiment, the guide shaft 15 is fitted into the inside of the lens barrel 10 and is also joined to the barrel cover 13.

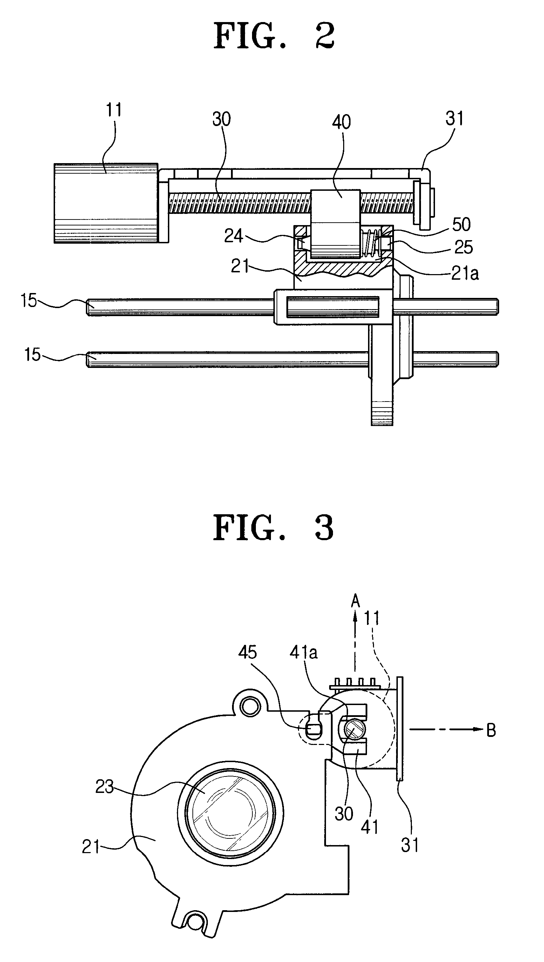

Referring to Figures 2 and 3, the lens module 20 includes the focusing lens or the zoom lens and is installed movably within the lens barrel 10. In the present embodiment, the lens module 20 has a slider 21 slidably supported on the guide shaft 15 and a zoom lens 23 supported by the slider 21. The slider 21 has a mounting unit 21 a for movably supporting the power transferring member 40. The mounting unit 21 a will be described in further detail below.

The lead screw 30 is rotatably supported by a supporting bracket 31, joined to the lens barrel 10, and has a screw thread on its outer periphery. A driving motor 31 is supported on the supporting bracket 31. The lead screw 30 is exposed to the inside of the lens barrel 10 and arranged in parallel with the guide shaft 15. Thus, the slider 21 is able to move along the axial direction of the lead screw 30 and the guide shaft 15.

The power transfer member 40 is assembled to the slider and has teeth which engage the thread of the lead screw 30 in a tooth. Therefore, upon rotation of the lead screw 30, the power transferring member 40 is moved axially along the lead screw 30 and moves the slider 21.

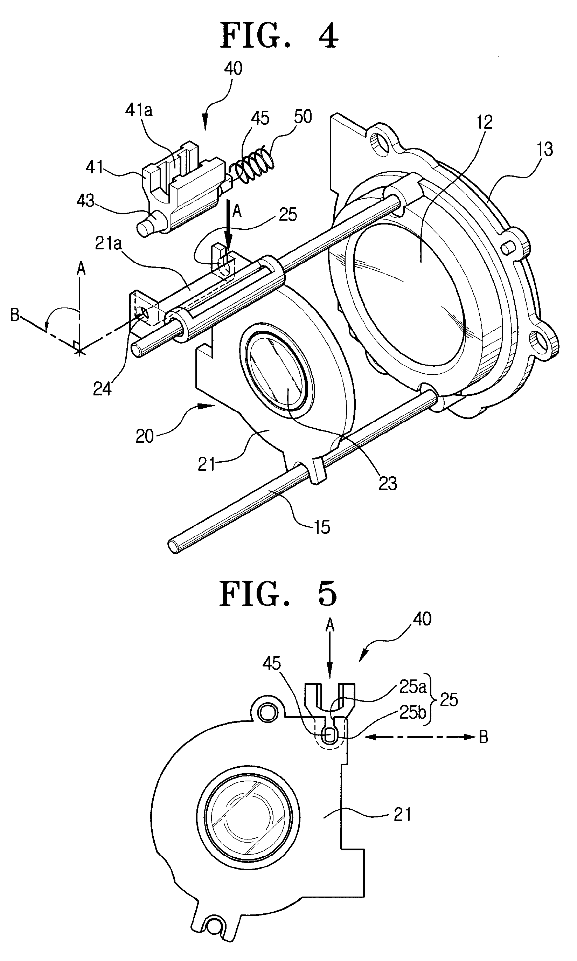

Referring to Figure 4, the power transferring member 40 has a toothed part 41 into which the lead screw 30 is received so as to be engaged by the toothed part 41. The power transferring member 40 has a conical axial projection 43 at one end and a non-circular cross-section axis projection 45 at its other end.

The tooth-shaped part 41 preferably has a U-shaped cross-section and an internal rib 41a adapted to be received in the thread to the lead screw 30. The lead screw 30 is received in the power transferring member 40 through the upper open part of the toothed part 41. The cross-section of the non-circular cross-section projection 45 is a rectangle having sides of different lengths.

The power transferring member 40 is movably assembled to the mounting unit 21a of the slider 21. For this purpose, the mounting unit 21a has a through hole 24 at one end for receiving and supporting the conical projection 43 and a notch 25 for receiving and supporting the other projection 45. The conical shape of the conical projection 43 means that the slider 21 can be moved up, down, right and left while the projection 43 is received in the hole 24. The power transferring member 40 is connected to the lead screw 30 after having been rotated at or about 90 degrees after fitted into the through hole 24 and the notch 25 in direction "A."

Figure 5 shows the power transferring member 40 fitted into the slider 21 in direction "A." Figure 3 shows the power transferring member 40 after it has been rotated 90 degrees after being fitted into the slider 21.

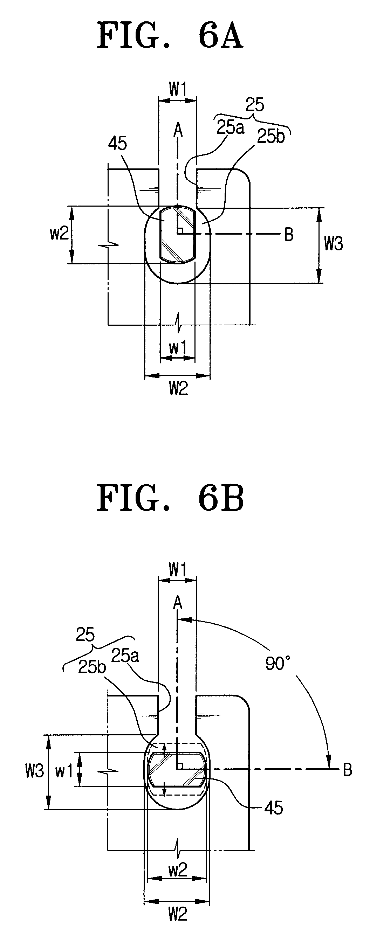

Referring to Figure 6A, the notch 25 is keyhole-shaped and comprises a first, openended, parallel-sided portion 25a and a circular part 25b. The first potion 25a is open in direction "A" and has a width W1 that corresponds to the short width w1 of the non-circular cross-section projection 45 with respect to direction "B" perpendicular to direction "A." As the non-circular cross-section projection 45 is joined by passing it through the first potion 25a, the short width w1 is formed smaller than the width W1 of the first portion 25a.

The second portion 25b is connected with the first portion 25a and extends further in direction "A." The second portion 25b, as shown in Figure 6B, has a first width W2 that corresponds to the long width w2 of the non-circular cross-section projection 45. Preferably, the first width W2 of the second portion 25b is formed larger than the long width w2. Also, the second portion 25b has a second width W3 that is naturally larger than the short width w1 in direction "A." Therefore, if the non-circular cross-section projection 45 is rotated at or about 90 degrees, after being fitted into the second portion 25b, the long width w2 of the non-circular cross-section projection 45 becomes perpendicular to the first portion 25a, as shown in Figure 6B, so that the second axis 45 can not be moved through the first portion 25a. Also, the non-circular cross-section projection 45 preferably has a degree of freedom in the second portion 25b, allowing movement by a predetermined distance in direction "A." Namely, as the short width w1 of the second axis 45 is smaller than the second width W3 of the second portion 25b in direction "A," the second axis 45 can be moved a predetermined distance in direction "A" as shown by the dashed lines in Figure 6B. Therefore, the non-circular cross-section projection 45 of the power transferring member 40 is able to be positionally adjusted in direction "A." As a result, the position of the power transferring member 40 can be adjusted.

Upon assembling of the power transferring member 40 to the mounting unit 21 a, a spring 50 is additionally provided. The spring 50 fits onto the non-circular cross-section projection 45 and applies pressure on the power transferring unit 40 toward the through hole 24. Therefore, the conical projection 43 has a degree of freedom with respect to external forces while remaining received in the through hole 24.

In an apparatus for driving a lens having the foregoing construction, the power transferring member 40 can be assembled to cope flexibly with assembly or manufacturing errors of the lead screw 30. More specifically, the power transferring member 40 at its height, can deliver power within a predetermined distance in the up and down directions with the lead screw 30 fit in its U-shaped groove by the U-shaped structure of the tooth-shaped part 41.

Since, the the first axis 43 is formed in a conical shape. Thus, fine adjustment for a constant height or twisted angel is possible in the event that the first axis 43 is pushed back by a load of an assembly error.

Also, the second axis 25 is able to be fine-adjusted in the first direction "A" at the second slit part 25b. Thus, in case the lead screw 30 and the power transferring member 40 are assembled in a non-parallel state with respect to each other, the second axis 25 has a degree of freedom to sufficiently compensate for the non-parallel state.

As is apparent from the foregoing, according to an embodiment of the present invention for driving a lens in a camera, the power transferring member for connecting the lens module to the lead screw has a degree of freedom by which fine position change is possible with respect to many directions.

Advantageously, a frictional load generated between the power transferring member and the lead screw due to assembly and manufacturing errors of the lead screw can be reduced. Power consumption of the driving motor can be minimized and noise due to friction can also be reduced.

## Claims

1. A mechanism for moving an object using a lead screw, the mechanism comprising a lead screw, an object and means for drivingly coupling the object to the lead screw, **characterised in that** the means for drivingly coupling the object to the lead screw comprises a lead screw engaging part and a drive receiving means attached to said object for receiving the lead screw engaging part so as to allow limited movement of the lead screw engaging part relative to the drive receiving means.

2. A mechanism according to claim 1, wherein said limited movement is parallel to the axis of the lead screw.

3. A mechanism according to claim 2, including a biasing spring for biasing the lead screw engaging part to one end of its range of movement relative to the drive receiving means.

4. A mechanism according to any preceding claim, wherein the lead screw engaging means comprises first and second coaxial projections extending on opposite directions parallel to the axis of the lead screw and the drive receiving means has a hole which receives the first projection and a notch which receives the second projection.

5. A mechanism according to claim 4, wherein the first projection is, at least in part, tapered.

6. A mechanism according to claim 4 or 5, wherein the notch bulges at its closed end and the second projection is wider in one transverse direction than in the other orthogonal transverse direction such that it can be inserted into the slot in a first orientation but cannot be removed from the slot in a second orientation, in which the lead screw engaging means is rotated by substantially 90° about the axis of the second projection with respect to the first orientation.

7. A camera including a mechanism according to any preceding claim, wherein the object comprises a lens.

8. A camera according to claim 7, including a lens barrel, wherein said mechanism is installed in the lens barrel.

9. An apparatus for driving a lens in a camera comprising:
a lens module slidably installed in a lens barrel;
a lead screw rotatably installed in the lens barrel;
a power transferring member assembled on the lens module, wherein said power transferring member comprises a tooth shaped part corresponding to a shape of said lead screw, and wherein said lens module comprises a mounting unit adapted to movably receive the power transferring member.

10. The apparatus of claim 9, further comprising a driving motor, wherein said lead screw is adapted to be rotated by the driving motor.

11. The apparatus of claim 9, wherein the mounting unit comprises a through groove adapted to receve a first end of the power transferring member.

12. The apparatus of claim 11, wherein said first end of the power transferring member is conical.

13. The apparatus of claim 9, wherein the mounting unit comprises a slit groove adapted to receive a second end of the power transferring member.

14. The apparatus of claim 13, wherein said second end of the power transferring member is movable in a direction perpendicular to a sliding direction of the lens module.

15. The apparatus of claim 13, wherein said slit groove has a first slit part and a second slit part, the first slit part having a width smaller than a width of the second slit part.

16. The apparatus of claim 15, wherein said second end of the power transferring member has a cross section having a first width corresponding to the width of the first slit part, and a second width corresponding to the width of the second slit part.

17. The apparatus of claim 16, wherein said power transferring member is rotatable about a longitudinal axis such that in a first orientation said second end is movable through said first slit part, and in a second orientation said second end is not movable through said first slit part.
